# EUROPEAN PATENT SPECIFICATION

(11) **EP 4 268 309 B1**
(45) Date of publication and mention of the grant of the patent: **05.11.2025**
(21) Application number: 21845016.1
(22) Date of filing: 23.12.2021
(51) Int. Cl.: H01M 10/0565, H01M 4/62, H01M 10/052

(54) **A POLYMER ELECTROLYTE**
POLYMERELEKTROLYT
ÉLECTROLYTE POLYMÈRE

(30) Priority: 24.12.2020 EP 20217308
(43) Date of publication of application: 01.11.2023
(73) Proprietor: Umicore, 1000 Brussels (BE)
(72) Inventor: KUMAKURA, Shinichi, 2250 Olen (BE); KUBO, Masataka, Tsu City, Mie Prefecture 514-8507 (JP)
(74) Representative: Umicore RDI Patent Department
(86) International application number: PCT/EP2021/087465
(87) International publication number: WO 2022/136630

(56) References cited:
- EP-A1- 2 828 692
- US-A- 4 962 218
- ZHANG Z ET AL: "Novel network polymer electrolytes based on polysiloxane with internal plasticizer", ELECTROCHIMICA ACTA, ELSEVIER, AMSTERDAM, NL, vol. 45, no. 13, 1 March 2000 (2000-03-01), pages 2131 - 2138, XP004202228, ISSN: 0013-4686, DOI: 10.1016/S0013-4686(99)00435-1
- JIANLONG NI ET AL: "SYNTHESIS OF A NOVEL POLYSILOXANE-BASED POLYMER ELECTROLYTE AND ITS IONIC CONDUCTIVITY", POLYMERS FOR ADVANCED TECHNOLOGIES, WILEY & SONS, BOGNOR REGIS, GB, vol. 4, no. 2 / 03, 1 February 1993 (1993-02-01), pages 80 - 84, XP000359775, ISSN: 1042-7147, DOI: 10.1002/PAT.1993.220040204
- THOMAS: "GPC/SEC Practical Tips and Tricks", 1 October 2011 (2011-10-01), XP055608344, Retrieved from the Internet <URL:https://www.agilent.com/cs/library/slidepresentation/Public/GCC2011-Wksp_GPC_Tips-and-Tricks_Presentation.pdf> [retrieved on 20190724]

## Description

### Field of the invention

The present invention relates to a polymer electrolyte suitable for use in lithium-ion secondary batteries.

### Background of the invention

Polymer electrolytes are interesting alternatives to liquid electrolytes in batteries. In that context, polyethylene oxide (PEO) based electrolytes have been extensively studied in the literature.

For examples, Ruoyuan Tao et al. in J. Appl. Electrochem. 35, 163-168 (2005) discloses a positive electrode comprising poly(ethylene oxide) and lithium bis(trifluoromethanesulfonyl)imide (Li(N(SO₂CF₃)₂)), also called LiTFSI. PEO and LiTFSI were dissolved in acetonitrile in order to prepare an electrolyte solution. A positive electrode active material was added to the electrolyte solution.

US 7,585,934 B2 discloses the use of EO/PO/AGE and lithium bis(trifluoromethanesulfonyl)imide (LiTFSI, Li(N(SO₂CF₃)₂)) as a solid polymer electrolyte film. This document discloses in the working examples a copolymerization procedure of EO, PO, and AGE. In particular, LiTFSI was added as a Li salt to polyether polymer composition comprising said EO/PO/AGE copolymer, in an amount such that a ratio of (mol number of lithium atom in the electrolyte salt)/(mol number of oxygen atom in the polyether polymer) was 0.05.

Despite the recent advances in the field, capacity leak remains a problem when PEO based solid electrolytes are used in batteries. Capacity leak is a phenomenon according to which the electrolyte gains electronic conductivity which causes the electronic current to leak from the anode to the cathode.

There is thus a need for improved polymer electrolytes, particularly polymer electrolytes which cause reduced capacity leak when used in batteries.

### Summary of the invention

The inventors have surprisingly found that that it is possible to provide an improved polymer electrolyte fulfilling the above mentioned needs.

Thus, the primary object of the present invention is a polymer electrolyte suitable for use in lithium-ion secondary batteries being obtained by reaction between:
i. at least one polyether polymer [polymer (P), herein after], said polymer (P) comprising:
   a) at least 70.0 % by moles of oxyethylene units (EO);
   b) from 0.0 to 10.0 % by moles of oxypropylene units (PO); and
   c) from 1.00 to 4.0 % by moles of recurring units derived from at least one monomer [hereafter, monomer (M)] of general formula (I) or of general formula (II): 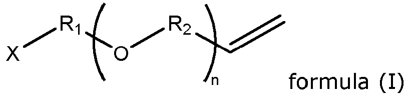 or 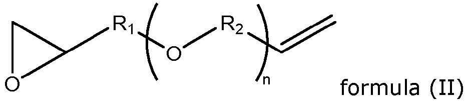 wherein
      - each of R₁ and R₂, equal to or different from each other and at each occurrence, is C₁₋₆ alkanediyl wherein said C₁₋₆ alkanediyl, is optionally substituted with one or more substituents selected from halide, C₁₋₄ alkyl, C₃₋₆ cycloalkyl, CF₃, OR₈, and wherein each of R₈, equal to or different from each other and at each occurrence, is independently selected from the group hydrogen and C₁₋₄ alkyl; n is an integer 0 or 1 or 2;
      - each of X is a leaving group selected from the group consisting of halide, trifluoromethanesulfonate, nonafluorobutanesulfonate, p-toluenesulfonate and methanesulfonate;
      and
ii. at least one polysiloxane compound having the formula (III): 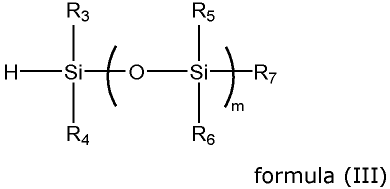 wherein
   - each of R₃, R₄, R₅, R₆ and R₇, equal to or different from each other and at each occurrence, is independently selected from the group consisting of C₁₋₆ alkyl, C₃₋₆ cycloalkyl, aryl, C₁₋₆ alkoxy, heterocyclyl, wherein said C₁₋₆ alkyl, C₃₋₆ cycloalkyl, aryl, C₁₋₆ alkoxy, heterocyclyl are optionally substituted with one or more substituents selected from halide, C₁₋₄ alkyl, C₃₋₆ cycloalkyl, CF₃, OR₉, and wherein each of R₉, equal to or different from each other and at each occurrence, is independently selected from the group consisting of hydrogen, C₁₋₄ alkyl, and an hydroxyl protecting group,
   - m is an integer of at least 3; and
   wherein said at least one polysiloxane compound having the formula (III) is grafted to said at least one polymer (P) through reaction of at least a fraction of the -CH=CH₂ moiety of monomer (M) with the H-Si moiety of the polysiloxane compound having the formula (III).

### Detailed description of the invention

### The polymer electrolyte

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that when, the polymer electrolyte according to the present invention is used in a battery, in particular in solid-state lithium-ion batteries, capacity leaking is reduced which resulted in a battery with improved performance, as demonstrated in the working examples.

Within the context of the present invention, the expression "at least one polyether polymer [polymer (P), herein after)" is intended to denote one or more than one polymer (P). Similarly the expression"at least one polysiloxane compound having the formula (III)" is intended to denote one or more than one polysiloxane compound having the formula (III).

In the rest of the text, the expressions "polymer (P)" and "polysiloxane compound having the formula (III)" is understood, for the purposes of the present invention, both in the plural and the singular.

As used herein the term "alkyl" has the broadest meaning generally understood in the art, and may include a moiety which is linear or branched, or a combination thereof.

The term "alkyl" - alone or in combination means a straight or branched alkane-derived radical, for example, C_{F-G} alkyl defines a straight or branched alkyl radical having from F to G carbon atoms, e.g. C₁₋₄ alkyl defines a straight or branched alkyl radical having from 1 to 4 carbon atoms such as for example methyl, ethyl, 1-propyl, 2-propyl (isopropyl), 1-butyl, 2-butyl, 2-methyl-2-propyl (*tert*-butyl), 2-methyl-1-propyl (isobutyl).

The term "cycloalkyl" - alone or in combination means a cyclic alkane-derived radical, for example, C_{L-M} cycloalkyl defines a cyclic alkyl radical having from L to M carbon atoms, e.g. C₃₋₆ cycloalkyl defines a cyclic alkyl radical having from 3 to 6 carbon atoms such as for example cyclopropyl, cyclobutyl, cyclopentyl, cyclohexyl and the like.

The term "aryl" - alone or in combination means phenyl, naphthyl or anthracenyl optionally carbocyclic fused with a cycloalkyl or heterocyclyl of preferably 5-7, more preferably 5-6, ring members and/or optionally substituted with 1 to 5 groups or substituent. An aryl may be optionally substituted whereby the substituent is attached at one point to the aryl or whereby the substituent is attached at two points to the aryl to form a bicyclic system e.g. benzodioxole, benzodioxan, benzimidazole.

The term "heterocyclyl" - alone or in combination means a cyclic alkane-derived radical in which at least one carbon atom is replaced by a heteroatom independently selected from the group consisting of oxygen, nitrogen and sulphur, such as pyrrolidine, piperidine or morpholine and the like.

The term "alkoxy" - alone or in combination means a straight or branched alkane-derived radical in which the carbon atom bearing the radical is replaced by an oxygen atom. The alkoxy moiety has a -O-Rₓ structure wherein Rₓ is an alkyl.

The term "alkanediyl" - alone or in combination means a straight or branched alkyl derived divalent radical.

As said above, the polymer (P) comprises
a) at least 70.0 % by moles of the recurring units of the of oxyethylene units (EO);
b) from 0.0 to 10.0 % by moles of oxypropylene units (PO); and
c) from 1.00 to 4.0 % by moles of recurring units derived from at least one monomer [hereafter, monomer (M)] of general formula (I) or of general formula (II): 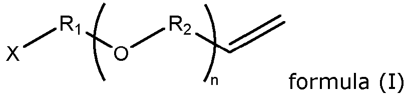 or 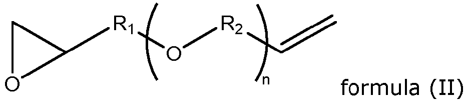 wherein
   - each of R₁ and R₂, equal to or different from each other and at each occurrence, is C₁₋₆ alkanediyl wherein said C₁₋₆ alkanediyl, is optionally substituted with one or more substituents selected from halide, C₁₋₄ alkyl, C₃₋₆ cycloalkyl, CF₃, OR₈, and wherein each of R₈, equal to or different from each other and at each occurrence, is independently selected from the group hydrogen and C₁₋₄ alkyl; n is an integer 0 or 1 or 2;
   - each of X is a leaving group selected from the group consisting of halide, trifluoromethanesulfonate, nonafluorobutanesulfonate, p-toluenesulfonate and methanesulfonate.

Thus, at least 70.0 % by moles of the recurring units of the polymer (P) are oxyethylene recurring units (EO), preferably, at least 80.0 % by moles, preferably at least 85.0 % by moles, preferably at least 90.0 % by moles, more preferably at least 92.0 % by moles, more preferably at least 94.0 % by moles.

It is further understood that, at most 99.0 % by moles of the recurring units of the polymer (P) are EO units, more preferably at most 98.5 % by moles, more preferably at most 98.0 % by moles.

In a preferred embodiment, said polymer (P) comprises at least 80.0 % by moles and at most 99.0 % by moles, preferably at least 90.0 % and at most 98.5 % by moles, preferably at least 92.0 % and at most 98.5 % by moles of EO units, preferably at least 94.0 % and at most 98.5 % by moles of EO units.

When oxypropylene recurring units (PO) are present in the polymer (P), at most 10.0 % by moles of the recurring units of the polymer (P) are PO units, more preferably at most 6.0 % by moles, even more preferably at most 5.0 % by moles, even more preferably at most 4.0 % by moles, even more preferably at most 3.0 % by moles.

Advantageously, said polymer (P) comprises at least 0.1 % by moles, or at least 0.5 % by moles, or at least 1.0 % by moles of PO units.

In a preferred embodiment, said polymer (P) comprises at least 0.5 % by moles and at most 6.0 % by moles, or least 0.5 % by moles and at most 5.0 % by moles, or at least 0.5 % and at most 4.0 % by moles, or at least 1.0 % and at most 4.0 % by moles, or at least 1.0 % and at most 3.0 % by moles of PO units.

The presence of PO units allows to reduce the crystallinity of the polymer (P), which improvise its ionic conductivity.

For the purpose of the present invention, the term oxypropylene (PO)" is intended to refer to the formula -O-CH₂-CH₂-CH₂- or -O-CH₂-CH(CH₃)-, preferrably -O-CH₂-CH(CH₃)-.

Preferably, at least 1.2 % by moles of the recurring units of the polymer (P) are recurring units derived from the monomer (M) of general formula (I) or of general formula (II), as detailed above, or at least 1.5 % by moles, or at least 1.8 % by moles, or at least 2.2 % by moles.

It is further understood that at most 4.0 % by moles of the recurring units of the polymer (P) are recurring units derived from the monomer (M) of general formula (I) or of general formula (II), as detailed above, more preferably at most 3.5 % by moles, even more preferably at most 3.0 % by moles.

In a preferred embodiment, said polymer (P) comprises at least 1.2 % by moles and at most 4.0 % by moles, preferably at least 1.5 % and at most 3.5 % by moles, preferably at least 1.5 % and at most 3.0 % by moles of recurring units derived from the at least one monomer (M) of general formula (I) or of general formula (II), as detailed above.

When the recurring units in the polymer (P) are derived from the monomer (M) of general formula (II), it is understood that the recurring unit is the result of a ring opening polymerization of the epoxide moiety.

When the recurring units in the polymer (P) are derived from the monomer (M) of general formula (I) with X being an acylchloride or acylbromide, it is understood that the recurring unit can be the result of a reaction between said monomer (M) and terminal OH groups of an EO unit or PO unit, of for example, a dihydroxy terminated polyethylene oxide (or a PEO-co-PPO copolymer) thereby forming an ester moiety.

When the recurring units in the polymer (P) are derived from the monomer (M) of general formula (I) with X being trifluoromethanesulfonate, nonafluorobutanesulfonate, p-toluenesulfonate or methanesulfonate, the recurring unit can be the result of a Williamson type reaction between said monomer (M) and terminal OH groups of an EO unit or PO unit, of for example, a dihydroxy terminated polyethylene oxide (or a PEO-co-PPO copolymer) in the presence of strong base such as NaH thereby forming an ether moiety. via alkolate formation and subsequent substitution of the X moiety of the monomer (M).

These polymerization reactions are known in the art and notably described by H.-Q. Xie, J.-S. Guo, G.-Q. Yu, and J. Zu, in Journal of Applied Polymer Science 2001, 80, 2446.

Preferably, each of X in the monomer (M) of general formula (I) is a halide, more preferably a halide selected from the group consisting of chloride, bromide and iodide.

According to a preferred embodiment of the polymer electrolyte suitable for use in lithium-ion secondary batteries, the monomer (M) is of formula (II) 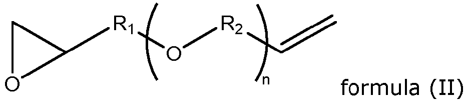 wherein
- each of R₁ and R₂, equal to or different from each other and at each occurrence, is a C₁₋₂ alkanediyl and n is an integer 0 or 1, preferably n is 1.

In another preferred embodiment of the polymer electrolyte suitable for use in lithium-ion secondary batteries, the monomer (M) according to the present invention is chosen among those of formulae (IA) to (IF) and (IIA) to (IIE): 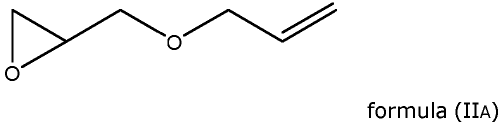 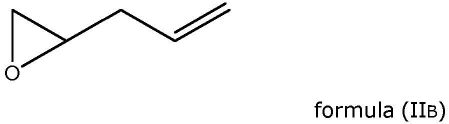 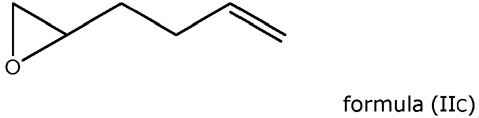 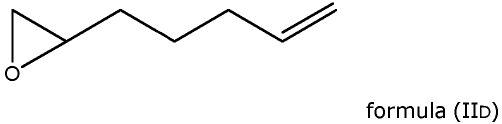 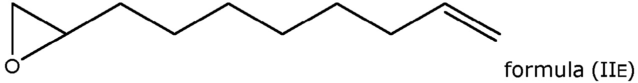 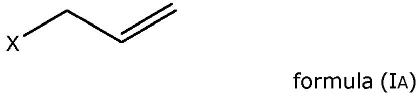 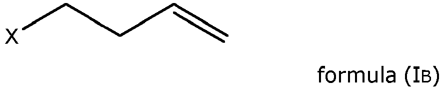 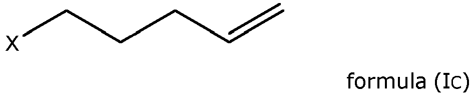 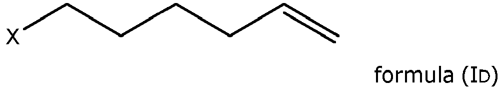 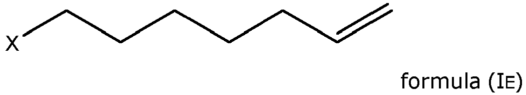 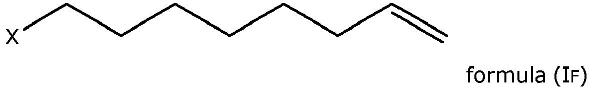 wherein X is selected from the group consisting of halide, trifluoromethanesulfonate, nonafluorobutanesulfonate, p-toluenesulfonate and methanesulfonate, acylchoride, acylbromide. Preferably X is an halide, more preferably an halide selected from the group consisting of chloride, bromide, iodide. Even more preferably X is a bromide.

More preferably, the monomer (M) according to the present invention is a compound chosen among those of formulae (IA) to (IF).

Most preferably, said monomer (M) is a compound of formula (IA).

According to a preferred embodiment of the polymer electrolyte suitable for use in lithium-ion secondary batteries, the polymer (P) consist essentially of;
a) from 94.0 to 98.5 by moles of EO recurring units;
b) from 0.5 to 3.0 % by moles of PO recurring units; and
c) from 1.0 to 3.0 % by moles of recurring units derived from the monomer (M) of general formula (II): 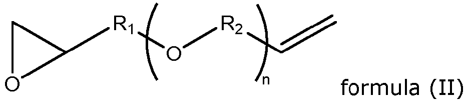 wherein each of R₁ and R₂, equal to or different from each other and at each occurrence, is a C1-2 alkanediyl and n is an integer 0 or 1, preferably n is 1. It is understood that chain defects, or very minor amounts of other units might be present, being understood that these latter do not substantially modify the properties of polymer (P).

Preferably, said polymer (P), as detailed above, has an Mw (weight average molecular weight) of at least 10 000 g/mol, more preferably at least 20 000 g/mol, even more preferably at least 40 000 g/mol, even more preferably at least 50 000 g/mol.

It is understood that said polymer (P), as detailed above, preferably has an Mw of at most 150 000 g/mol, more preferably at most 100 000 g/mol.

In a preferred embodiment, said polymer (P), as detailed above, has a Mw of at least 10 000 g/mol and at most 150 000 g/mol, preferably at least 20 000 g/mol and at most 150 000 g/mol, more preferably at least 40 000 g/mol and at most 100 000 g/mol, even more preferably at least 50 000 g/mol and at most 100 000 g/mol.

According to the present invention, the Mw is measured by GPC with a PEO standards calibration. Thus, the mentioned Mw are PEO equivalents .

Alternatively and even preferably, said polymer (P), as detailed above, has an Mn (number average molecular weight) of at least 10 000 g/mol, more preferably at least 20 000 g/mol, even more preferably at least 40 000 g/mol, even more preferably at least 50 000 g/mol.

It is understood that said polymer (P), as detailed above, preferably has an Mn of at most 150 000 g/mol, more preferably at most 100 000 g/mol.

In a preferred embodiment, said polymer (P), as detailed above, has a Mn of at least 10 000 g/mol and at most 150 000 g/mol, preferably at least 20 000 g/mol and at most 150 000 g/mol, more preferably at least 40 000 g/mol and at most 100 000 g/mol, even more preferably at least 50 000 g/mol and at most 100 000 g/mol.

According to the present invention, the Mn is measured by GPC with a PEO standards calibration. Thus, the mentioned Mn are PEO equivalents .

Preferably, the polymer (P) according to the invention is a random or a block copolymer, more preferably a random copolymer.

Preferably, the polymer (P) according to the invention is linear or branched, more preferably linear.

A particularly preferred polymer (P) is a linear random copolymer in which the backbone chain can be notably sketched according to formula (IV): 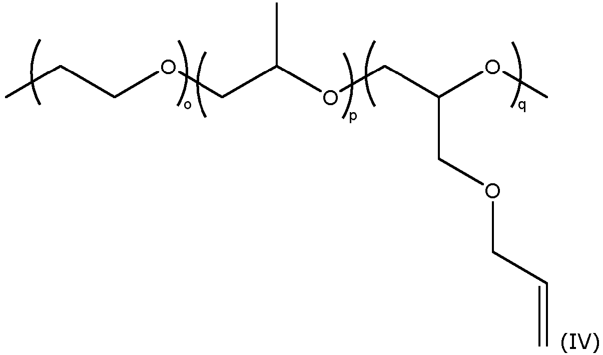 wherein the ratio of o to q (o/q) in the formula (IV) of the polymer (P) is between 25 and 100, or between 35 and 75, or between 40 and 60. The ratio of p to q (p/q) in the formula (IV) of the polymer (P) is advantageously between 0.05 and 1.50, preferably between 0.10 and 1.00, preferably between 0.20 and 0.60.

Such polymers (P) are notably commercially available from Meisei Chemical works ltd under the tradename Alkox^{®} CP-A series.

As said, the polysiloxane compound having the formula (III), 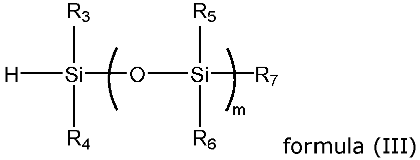 wherein
- each of R₃, R₄, R₅, R₆ and R₇, equal to or different from each other and at each occurrence, is independently selected from the group consisting of C₁₋₆ alkyl, C₃₋₆ cycloalkyl, aryl, C₁₋₆ alkoxy, heterocyclyl, wherein said C₁₋₆ alkyl, C₃₋₆ cycloalkyl, aryl, C₁₋₆ alkoxy, heterocyclyl are optionally substituted with one or more substituents selected from halide, C₁₋₄ alkyl, C₃₋₆ cycloalkyl, CF₃, OR₉, and wherein each of R₉, equal to or different from each other and at each occurrence, is independently selected from the group consisting of hydrogen, C₁₋₄ alkyl, and an hydroxyl protecting group, and
- m is an integer of at least 3;
is grafted to the polymer (P), as detailed above, through reaction of at least a fraction of the -CH=CH₂ moiety of monomer (M) with the H-Si moiety of the polysiloxane compound having the formula (III).

Preferably, each of R₃ and R₄, equal to or different from each other and at each occurrence, is independently C₁₋₆ alkyl, more preferably, each of R₃ and R₄, equal to or different from each other and at each occurrence, is methyl, ethyl, propyl, or isopropyl, even more preferably, each of R₃ and R₄, equal to or different from each other and at each occurrence, is methyl.

Preferably, each of R₅ and R₆, equal to or different from each other and at each occurrence, is independently selected from C₁₋₄ alkyl or phenyl, wherein said C₁₋₄ alkyl is optionally substituted with one or more substituents selected from halide, C₁₋₄ alkyl, or CF₃, more preferably, each of R₅ and R₆, equal to or different from each other and at each occurrence, is methyl, ethyl, propyl, or isopropyl, even more preferably, each of R₅ and R₆, equal to or different from each other and at each occurrence, is methyl.

Preferably, each of R₇ is a C₁₋₆ alkyl, more preferably, each of R₇ is C₁₋₄ alkyl such as methyl, ethyl, n-propyl, iso-propyl, n-butyl, iso-butyl or tert-butyl.

Preferably, m is an integer of at least 5, more preferably at least 7, even more preferably at least 8.

It is further understood that m is preferably an integer of at most 1000, more preferably at most 500, even more preferably at most 100, even more preferably at most 20, even more preferably at most 15.

In a preferred embodiment of the present invention, m is an integer of at least 5 and at most 1000, preferably at least 5 and at most 500, more preferably at least 5 and at most 100, eve more preferably at least 5 and at most 20, even more preferably at least 7 and at most 20, even more preferably at least 8 and at most 15.

Within the context of the present invention, it is understood that the - CH=CH₂ moiety of monomer (M) is able to react with the H-Si moiety of the polysiloxane compound having the formula (III), as detailed above, so as to obtain a covalent bond between both moieties. Such reaction is in general referred to as a hydrosilylation reaction. It is further understood that said reaction may involve the formation of one or more intermediates including, metal complexes and sigma complexes.

For reacting, at least a fraction of the -CH=CH₂ moiety of monomer (M), as detailed above, with the H-Si moiety of the polysiloxane compound having the formula (III), as detailed above, several techniques known in the art can be successfully used.

Polymer (P), as detailed above, and the polysiloxane having formula (III), as detailed above, can notably be reacted in the molten state; melt compounders such as extruders, melt kneaders or other devices can be advantageously used to this aim.

Polymer (P), as detailed above, and the polysiloxane having formula (III), as detailed above, can notably be reacted in solution; according to this embodiment polymer (P) and the polysiloxane having formula (III), as detailed above, are at least partially dissolved in a solvent. Dissolution can be obtained either at room temperature or preferably, upon heating to a temperature of at least 70 °C, more preferably at least 80°C, even more preferably at the reflux temperature of the solvent. The selection of this solvent is not critical, provided that it efficiently solvates both polymer (P) and the polysiloxane having formula (III), as detailed above, and does not interfere with the hydrosilylation reaction. Generally, an organic solvent will be preferably selected. Among these organic solvents, mention can be notably made of benzene, toluene, xylene, cymene and the like.

Further, the polymer (P), as detailed above, and the polysiloxane having formula (III), as detailed above, can notably be reacted in the presence of a catalyst, in particular a hydrosilylation catalyst.

Such hydrosilylation catalysts are known in the art. Mention may be notably made of ruthenium, platinum, or rhodium based catalysts, such as notably a Karstedt's catalyst, Wilkinson catalyst, Speier catalyst and mixtures thereof.

Within the context of the present invention, the expression "through reaction of at least a fraction of the -CH=CH₂ of monomer (M) with the H-Si moiety of the polysiloxane compound having the formula (III)" means that only a fraction or the totality of the-CH=CH₂ of monomer (M) can react with the H-Si moiety of the polysiloxane compound having the formula (III).

Preferably, said polysiloxane compound having formula (III), as detailed above, is grafted to polymer (P), as detailed above, through reaction of at least 10% by moles, more preferably at least 15 % by moles, even more preferably at least 20% by moles, even more preferably at least 25% by moles, even more preferably at least 30% by moles, even more preferably at least 35% by moles, even more preferably at least 40% by moles, even more preferably at least 45% by moles, of the-CH=CH₂ moiety of monomer (M) with the H-Si moiety of the polysiloxane compound having the formula (III).

It is further understood that the polysiloxane compound having formula (III), as detailed above, can be grafted to polymer (P), as detailed above, through reaction of 100 % by moles, preferably at most 95% by moles, more preferably at most 90% by moles, even more preferably at most 85% by moles, even more preferably at most 80% by moles, even more preferably at most 75% by moles, even more preferably at most 70% by moles, even more preferably at most 65% by moles, even more preferably at most 60% by moles, of the-CH=CH₂ moiety of monomer (M) with the H-Si moiety of the polysiloxane compound having the formula (III).

In a preferred embodiment, said polysiloxane compound having formula (III), as detailed above, is grafted to polymer (P), as detailed above, through reaction of at least 10% and at most 90% by moles, more preferably at least 30% and at most 70% by moles, even more preferably at least 40% and at most 60% by moles, of the -CH=CH₂ moiety of monomer (M) with the H-Si moiety of the polysiloxane compound having the formula (III).

The reaction can be monitored by using known analytical methods such as notably by using GPC or ¹H-NMR methods, as illustrated in the experimental part.

Preferably, said polymer electrolyte is obtained by reaction between said at least one polymer (P) and at least 6 wt.% or at least 7 wt.% or at least 8 wt.% of said at least one polysiloxane compound, with regards to the total amount of said at least one polymer (P) and said at least one polysiloxane compound.

Preferably, said polymer electrolyte is obtained by reaction between said at least one polymer (P) and at most 27 wt.% or at most 25 wt.% or at most 22 wt.% of said at least one polysiloxane compound with regards to the total amount of said at least one polymer (P) and said at least one polysiloxane compound.

In a preferred embodiment, said polymer electrolyte is obtained by reaction between said at least one polymer (P) and at least 6 wt.% and at most 27 wt.% or at least 7 wt.% and at most 25 wt.% or at least 8 wt.% and most 22 wt.% of said at least one polysiloxane compound with regards to the total amount of said at least one polymer (P) and said at least one polysiloxane compound.

### Examples

The following examples are intended to further clarify the present invention, and are not intended to limit the scope of the present invention.

### 1. Example 1

### 1.1. Materials and method

Unless specified otherwise, the following materials were used as described hereafter.

The random polymer (P) was purchased from Meisei Chemical works ltd under the tradename CP series CP-A. Alternatively, the polymer (P) can be prepared by following the procedure disclosed in H.-Q. Xie, J.-S. Guo, G.-Q. Yu, and J. Zu, Journal of Applied Polymer Science 2001, 80, 2446.

The monohydride terminated polydimethylsiloxane (SiH-terminated PDMS, M_{w} = 850 g/mol) was purchased from Gelest, Inc.

Silica-supported Karsted-type catalyst were prepared according to Q. J. Miao, Z.-P. Fang, and G. P. Cai, Catalysis Communications 2003, 4, 637-639.

LiTFSI (lithium bis(trifluoromethanesulfonyl)imide salt, 99.95% trace metals basis) was purchased from *Sigma-Aldrich.*

Acetonitrile anhydrous 99.8 wt.% was purchased from *Sigma-Aldrich.*

Timcal Super P is a conductive carbon black powder (CAS no 1333-86-4) manufactured by *Imerys Graphite & Carbon.*

Polyethylene oxide (PEO having a M_{w} of 1,000,000) was purchased from Alfa Aesar.

The ¹H spectra were recorded at room temperature on a JEOL JNM ECZ 500 MHz NMR spectrometer. The polymer samples were dissolved in CDCl₃ and the internal standard was optimized by using tetramethylsilane (TMS).

The inductively coupled plasma (ICP) measurements were carried out using an Agilent 720 ICP-OES (*Agilent Technologies,* https://www.agilent.com/cs/library/brochures/5990-6497EN%20720-725_ICP-OES_LR.pdf). 1 gram of powder sample is dissolved into 50 mL of high purity hydrochloric acid (at least 37 wt.% of HCl with respect to the total weight of solution) in an Erlenmeyer flask. The flask is covered by a watch glass and heated on a hot plate at 380 °C until the powder is completely dissolved. After being cooled to room temperature, the solution from the Erlenmeyer flask is poured into a first 250 mL volumetric flask. Afterwards, the first volumetric flask is filled with deionized water up to the 250 mL mark, followed by a complete homogenization process (1^{st} dilution). An appropriate amount of the solution from the first volumetric flask is taken out by a pipette and transferred into a second 250 mL volumetric flask for the 2^{nd} dilution, where the second volumetric flask is filled with an internal standard element and 10% hydrochloric acid up to the 250 mL mark and then homogenized. Finally, this solution is used for ICP measurement.

### 1.2. Polymer electrolyte preparation

A Polymer (P), a random linear copolymer which characteristics are shown in table 1, is reacted with a monohydride terminated polydimethylsiloxane (SiH-terminated PDMS) by hydrosilylation according to the following procedure:

**Table 1**

| Polymer (P) | |
|---|---|
| Mol % of EO | 97.5 % |
| Mol % of PO | 0.5 % |
| Mol % of allyl glycidyl ether (AGE) | 1.9 % |
| Mn (GPC using a PEO standards calibration) | 72 000 g/mol |

A mixture containing 2.0 g of the polymer (P) and 0.36 g of SiH-terminated PDMS is added into 50 mL benzene containing 20 mg of silica-supported Karsted-type catalyst and heated at 90 °C for 48 hours under nitrogen atmosphere.

The heated mixture is filtered through celite to remove the solid catalyst, then placed under reduced pressure to remove the solvent. The PDMS was grafted to polymer (P) through reaction of 50 % by moles of the-CH=CH₂ of AGE units with the H-Si moiety of the PDMS.

The successful grafting was confirmed by ¹H-NMR and by GPC (gel permeation chromatography).

Polymer (P): ¹H-NMR (TMS, CDCl₃, 500 MHz): δ (ppm) 1.2 (d, CH₃ of PO units), 4 (m, -OCH₂-CH=CH₂ of the AGE units), 5.2 (m, CH₂=CH- of AGE units), 5.8 (m, - CH=CH₂ of AGE units).

Monohydride PDMS: ¹H-NMR (TMS, CDCl₃, 500 MHz): δ (ppm) 0.5 (m, -Si-CH₂-CH₂-), 0.9 (t, CH₃-CH₂-), 1.3 (br, -Si-CH₂-CH₂-CH₂-CH₃), 4.8 (m, H-Si-).

Polymer electrolyte: ¹H-NMR (TMS, CDCl₃, 500 MHz): δ (ppm): 0.5 (br, -Si-CH₂-CH₂- of PDMS), 0.9 (br, CH₃-CH₂- of PDMS), 1.1 (d, CH₃ of PO units), 1.2 (br, -Si-CH₂-CH₂-CH₂-CH₃ of PDMS), 1.4 (br, -OCH₂-CH₂-CH₂-Si-).

The presence of the broad peak at 1.4 ppm and the absence of a peak attributed to H-Si in the polyelectrolyte 1H-NMR spectrum are the confirmation of a successful hydrosilylation.

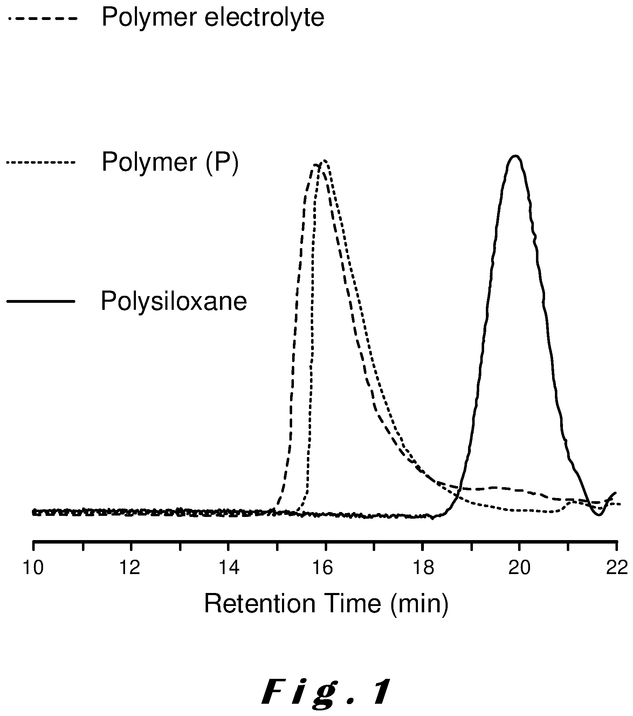

Figure 1 shows GPC elution curves of the polymer electrolyte as prepared above, polymer (P) and the polysiloxane.

The lower elution time of the polymer electrolyte in comparison to the polymer (P), indicates that the polymer electrolyte has a higher molecular weight than the polymer (P) and thus that the PDMS was successfully grafted onto the polymer (P).

### 1.3. Positive electrode active material preparation

A lithium transition metal composite oxide having a general formula Li_{1.010}(Ni_{0.621}Mn_{0.224}Co_{0.155})_{0.990}O_{2.00} as measured by ICP is prepared as a positive electrode active material according to the following process:
Step1) Transition metal oxidized hydroxide precursor preparation: a nickel-based transition metal oxidized hydroxide powder (TMH1) having a metal composition of Ni_{0.621}Mn_{0.224}Co_{0.155} as measured by ICP is prepared by a co-precipitation process in a large-scale continuous stirred tank reactor (CSTR) with mixed nickel manganese cobalt sulfates, sodium hydroxide, and ammonia.
Step 2) First mixing: the TMH1 prepared from Step 1) is mixed with Li₂CO₃ in an industrial blender so as to obtain a first mixture having a lithium to metal ratio of 0.85.
Step 3) First firing: the first mixture from Step 2) is fired at 900 °C for 10 hours in dry air atmosphere so as to obtain a first fired cake. The first fired cake is ground so as to obtain a first fired powder.
Step 4) Second mixing: the first fired powder from Step 3) is mixed with LiOH in an industrial blender so as to obtain a second mixture having a lithium to metal ratio of 1.01.
Step 5) Second firing: the second mixture from Step 4) is fired at 930 °C for 10 hours in dry air, followed by a crushing (bead milling) and sieving process so as to obtain a second fired powder.
Step 6) Third mixing: the second fired powder from Step 5) is mixed with 1.5 mol% of LiOH with respect to the total molar contents of Ni, Mn, and Co in an industrial blender so as to obtain a third mixture.
Step 7) Third firing: the third mixture from Step 6) is fired at 750 °C for 10 hours in dry air so as to obtain a positive electrode active material.

### 1.4. Positive electrode preparation

A positive electrode comprising the positive electrode active material prepared according to section 1.3 and the polymer electrolyte prepared according to section 1.2, is prepared according to the following procedure:
Step 1) Preparing a polymer electrolyte solution comprising the polymer electrolyte according to section 1.1 and LiTFSI in acetonitrile anhydrous 99.8 wt.%. The polymer electrolyte solution has a ratio of a polymer electrolyte : LiTFSI of 74 : 26 by weight.
Step 2) Mixing a polymer electrolyte solution prepared from Step 1), a positive electrode active material prepared according to section 1.2, and a carbon black powder (Timcal Super P carbon black) in acetonitrile solution with a ratio of 21 : 75 : 4 by weight so as to prepare a slurry mixture. The mixing is performed by a homogenizer for 45 minutes at 5000 rpm.
Step 3) Casting the slurry mixture from Step 2) on one side of an 20 µm-thick aluminum foil with 100 µm coater gap.
Step 4) Drying the slurry-casted foil at 30 °C for 12 hours followed by punching in order to obtain positive electrodes having a diameter of 14 mm.

### 1.5. Solid polymer electrolyte (SPE) preparation

A PEO-based solid polymer electrolyte (SPE) is prepared according to the process as follows:
Step 1) Mixing polyethylene oxide (PEO having a molecular weight of 1,000,000) with LiTFSI (purchased from Soulbrain Co., Ltd. instead of Sigma Aldrich) in acetonitrile anhydrous 99.8 wt.%, using a mixer for 30 minutes at 2,000 revolutions per minute (rpm). The molar ratio of ethylene oxide to lithium is 20.
Step 2) Pouring the mixture from Step1) into a Teflon dish and dried in 25 °C for 12 hours.
Step 3) Detaching the dried SPE from the dish and punching the dried SPE in order to obtain SPE disks having a thickness of 300 µm and a diameter of 19 mm.

### 1.6. Polymer cell assembling

The coin-type polymer cell is assembled in an argon-filled glovebox with an order from bottom to top: a 2032 coin cell can, a positive electrode prepared according to section 1.4, a SPE polymer electrolyte prepared according to section 1.5., a gasket, a Li anode, a spacer, a wave spring, and a cell cap. Then, the coin cell is completely sealed to prevent leakage of the electrolyte.

### 2. Comparative example

### 2.1. Polymer electrolyte

A poly(ethylene oxide) (PEO) powder is purchased from Alfa Aesar (Mw of 1,000,000 g/mol) is used instead of the polymer electrolyte according to the present invention.

### 2.2. Positive electrode preparation

A positive electrode comprising the positive electrode active material prepared according to section 1.3 and the polymer electrolyte according to the section 2.1, is prepared according to the following procedure:
Step 1) Preparing a polymer electrolyte solution comprising a polymer electrolyte according to section 2.1 and lithium LiTFSI in acetonitrile anhydrous 99.8 wt.%. The polymer electrolyte solution has a ratio of a polymer electrolyte : LiTFSI of 74 : 26 by weight.
Step 2) Mixing a polymer electrolyte solution prepared from Step 1), a positive electrode active material prepared according to section 1.3, and a carbon black powder (Timcal Super P carbon black) in acetonitrile solution with a ratio of 21 : 75 : 4 by weight so as to prepare a slurry mixture. The mixing is performed by a homogenizer for 45 minutes at 5000 rpm.
Step 3) Casting the slurry mixture from Step 2) on one side of an 20 µm-thick aluminum foil with 100 µm coater gap.
Step 4) Drying the slurry-casted foil at 30 °C for 12 hours followed by punching in order to obtain positive electrodes having a diameter of 14 mm.

### 2.3. Polymer cell assembling

The coin-type polymer cell is assembled in an argon-filled glovebox with an order from bottom to top: a 2032 coin cell can, a positive electrode prepared from section 2.2, a SPE prepared from section 1.5, a gasket, a Li anode, a spacer, a wave spring, and a cell cap. Then, the coin cell is completely sealed to prevent leakage of the electrolyte.

### 3. Comparison and testing method (Qtotal)

The capacity leaked (Qtotal) was measured for the coin cell prepared in section 2.3 and section 1.6. The coin cell prepared in section 2.3 comprises a polymer electrolyte according to the state of the art and the coin cell prepared in section 1.6 comprises a polymer electrolyte according to the invention.

Each coin-type polymer cell is cycled at 80°C using a Toscat-3100 computer-controlled galvanostatic cycling stations (from *Toyo,*
*http:*//*www.toyosystem.com*/*image*/*menu3*/*toscat*/*TOSCAT-3100.pdf*)*.* The coin cell testing procedure uses a 1C current definition of 160 mA/g in the 4.4-3.0 V/Li metal window range according to the schedule below:
Step 1) Charging in a constant current mode with C-rate of 0.05 with an end condition of 4.4 V followed by 10 minutes rest.
Step 2) Discharging in a constant current mode with C-rate of 0.05 with an end condition of 3.0 V followed by 10 minutes rest.
Step 3) Charging in a constant current mode with C-rate of 0.05 with an end condition of 4.4 V.
Step 4) Switching to a constant voltage mode and keeping 4.4 V for 60 hours.
Step 5) Discharging in a constant current mode with C-rate of 0.05 with an end condition of 3.0 V.

Qₜₒₜₐₗ is defined as the total leaked capacity at the high voltage and high temperature in the Step 4) according to the described testing method. A low value of Qₜₒₜₐₗ indicates a high stability of the positive electrode active material powder during a high temperature operation.

**Table 2**

| Positive electrode | Qₜₒₜₐₗ (mAh/g) |
|---|---|
| Example 1 section 1.6 | 60.30 |
| Comparative example, section 2.3 | 72.83 |

Table 2 summarizes the Qₜₒₜₐₗ of the polymer batteries comprising positive electrodes as prepared in example 1 section 1.6 and comparative example section 2.3. According to Table 2, it is observed that the polymer battery comprising the polymer electrolyte according to the present invention (example 1) has a significantly lower Qₜₒₜₐₗ than the polymer battery comprising the polymer electrolyte according to example 2. This indicates that the use of the polymer electrolyte according to the present invention provides a better electrochemical performance than the use of PEO which is a conventional polymer electrolyte. A low value of Qₜₒₜₐₗ indicates a high stability for the lithium-ion secondary batteries in the high voltage application at a high temperature.

## Claims

1. A polymer electrolyte suitable for use in lithium-ion secondary batteries being obtained by reaction between:
i. at least one polyether polymer [polymer (P), herein after], said polymer (P) comprising:
a) at least 70.0 % by moles of oxyethylene units (EO);
b) from 0.0 to 10.0 % by moles of oxypropylene units (PO); and
c) from 1.00 to 4.0 % by moles of recurring units derived from at least one monomer [hereafter, monomer (M)] of general formula (I) or of general formula (II): 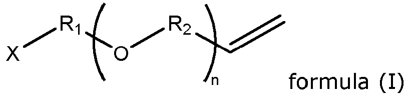 or 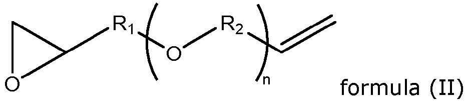 wherein
- each of R₁ and R₂, equal to or different from each other and at each occurrence, is C₁₋₆ alkanediyl wherein said C₁₋₆ alkanediyl, is optionally substituted with one or more substituents selected from halide, C₁₋₄ alkyl, C₃₋₆ cycloalkyl, CF₃, OR₈, and wherein each of R₈, equal to or different from each other and at each occurrence, is independently selected from the group hydrogen and C₁₋₄ alkyl; n is an integer 0 or 1 or 2;
- each of X is a leaving group selected from the group consisting of halide, trifluoromethanesulfonate, nonafluorobutanesulfonate, p-toluenesulfonate and methanesulfonate;
and
ii. at least one polysiloxane compound having the formula (III): 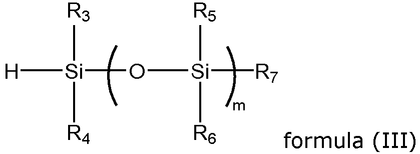 wherein
- each of R₃, R₄, R₅, R₆ and R₇, equal to or different from each other and at each occurrence, is independently selected from the group consisting of C₁₋₆ alkyl, C₃₋₆ cycloalkyl, aryl, C₁₋₆ alkoxy, heterocyclyl, wherein said C₁₋₆ alkyl, C₃₋₆ cycloalkyl, aryl, C₁₋₆ alkoxy, heterocyclyl are optionally substituted with one or more substituents selected from halide, C₁₋₄ alkyl, C₃₋₆ cycloalkyl, CF₃, OR₉, and wherein each of R₉, equal to or different from each other and at each occurrence, is independently selected from the group consisting of hydrogen, C₁₋₄ alkyl, and an hydroxyl protecting group,
- m is an integer of at least 3; and
wherein said at least one polysiloxane compound having the formula (III) is grafted to said at least one polymer (P) through reaction of at least a fraction of the - CH=CH₂ moiety of monomer (M) with the H-Si moiety of the polysiloxane compound having the formula (III).

2. The polymer electrolyte according to claim 1, wherein from 80.0 % by moles to 99.0 % by moles, preferably from 90.0 % by moles to 98.5 % by moles, preferably from 92.0 % by moles to 98.5 % by moles, preferably from 94.0 % by moles to 98.5 % by moles of the recurring units of the polymer (P) are EO units.

3. The polymer electrolyte according to claim 1 or claim 2, wherein from 0.5 % by moles to 5.0 % by moles, or from 0.5 % by moles to 4.0 % by moles, or from 1.0 % by moles to 4.0 % by moles, or from 1.0 % by moles to 3.0 % by moles of the recurring units of the polymer (P) are PO units.

4. The polymer electrolyte according to any one of the preceding claims, wherein from 1.2 % by moles to 4.0 % by moles, or from 1.5 % by moles to 3.5 % by moles, or from 1.5 % by moles to 3.0 % by moles of the recurring units of the polymer (P) are recurring units derived from the monomer (M) of general formula (I) or of general formula (II) wherein R₁, R₂, n and X are as defined in claim 1.

5. The polymer electrolyte according to any one of the preceding claims, wherein the monomer (M) is of formula (II) 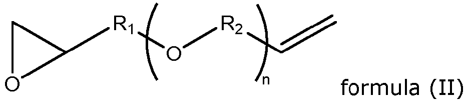 wherein
- each of R₁ and R₂, equal to or different from each other and at each occurrence, is a C₁₋₂ alkanediyl and n is an integer 0 or 1, preferably n is 1.

6. The polymer electrolyte according to any one of the preceding claims, wherein the polymer (P) is a random copolymer, having an Mn (number average molecular weight) of at least 10 000 g/mol and at most 150 000 g/mol.

7. The polymer electrolyte according to any one of the preceding claims, wherein each of R₃,R₄, and R₇, equal to or different from each other and at each occurrence, is independently C₁₋₆ alkyl; each of R₅ and R₆, equal to or different from each other and at each occurrence, is independently selected from C₁₋₄ alkyl or phenyl, wherein said C₁₋₄ alkyl is optionally substituted with one or more substituents selected from halide, C₁₋₄ alkyl, or CF₃; m is an integer of at least 5 and at most 1000, preferably at least 5 and at most 500, more preferably at least 5 and at most 100, eve more preferably at least 5 and at most 20, even more preferably at least 7 and at most 20, even more preferably at least 8 and at most 15.

8. The polymer electrolyte according to any one of the preceding claims, wherein the polymer (P) and the polysiloxane having formula (III) are at least partially dissolved in an organic solvent selected from the group consisting of benzene, toluene, xylene, and cymene.

9. The polymer electrolyte according to any one of the preceding claims, wherein the polysiloxane compound having the formula (III) is grafted to the polymer (P) in the presence of a catalyst, in particular a hydrosilylation catalyst chosen among a Karstedt's catalyst, Wilkinson catalyst, Speier catalyst or mixtures thereof.

10. The polymer electrolyte according to any one of the preceding claims, wherein the polysiloxane compound having formula (III) is grafted to polymer (P) through reaction of at least 10% and at most 90% by moles, more preferably at least 30% and at most 70% by moles, even more preferably at least 40% and at most 60% by moles, of the-CH=CH₂ moiety of monomer (M) with the H-Si moiety of the polysiloxane compound having the formula (III).

## Patentansprüche

1. Polymerelektrolyt, geeignet für eine Verwendung in Lithium-Ionen-Sekundärbatterien, erhalten durch Reaktion zwischen:
i. mindestens ein Polyetherpolymer [im Folgenden Polymer (P)], wobei das Polymer (P) umfasst:
a) mindestens 70,0 Mol-% Oxyethyleneinheiten (EO);
b) von 0,0 bis 10,0 Mol-% Oxypropyleneinheiten (PO); und
c) von 1,00 bis 4,0 Mol-% wiederkehrende Einheiten, die abgeleitet sind von mindestens einem Monomer [im Folgenden Monomer (M)] der allgemeinen Formel (I) oder der allgemeinen Formel (II): 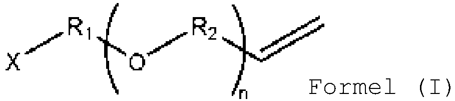 oder 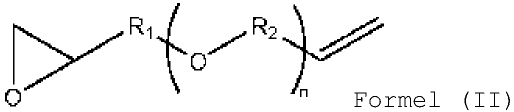 wobei
- jedes von R₁ und R₂, gleich oder verschieden voneinander und bei jedem Auftreten, C₁-₆-Alkandiyl ist, wobei das C₁-₆-Alkandiyl gegebenenfalls mit einem oder mehreren Substituenten, ausgewählt aus Halogenid, C₁-₄-Alkyl, C₃-₆-Cycloalkyl, CF₃, OR₈, substituiert ist und wobei jedes von R₈, gleich oder verschieden voneinander und bei jedem Auftreten, unabhängig ausgewählt ist aus der Gruppe Wasserstoff und C₁-₄-Alkyl; n ist eine ganze Zahl 0 oder 1 oder 2;
- jedes von X eine Abgangsgruppe ist, ausgewählt aus der Gruppe bestehend aus Halogenid, Trifluormethansulfonat, Nonafluorbutansulfonat, p-Toluolsulfonat und Methansulfonat;
und
ii. mindestens eine Polysiloxanverbindung mit der Formel (III): 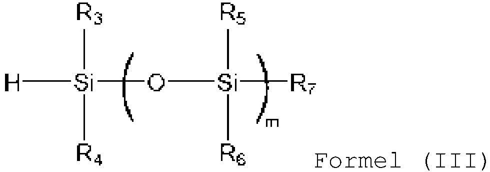
- jedes von R₃, R₄, R₅, R₆ und R₇, gleich oder verschieden voneinander und bei jedem Auftreten, unabhängig ausgewählt ist aus der Gruppe bestehend aus C₁-₆-Alkyl, C₃-₆-Cycloalkyl, Aryl, C₁-₆-Alkoxy, Heterocyclyl, wobei das C₁-₆-Alkyl, C₃-₆-Cycloalkyl, Aryl, C₁-₆-Alkoxy, Heterocyclyl gegebenenfalls mit einem oder mehreren Substituenten, ausgewählt aus Halogenid, C₁-₄-Alkyl, C₃-₆-Cycloalkyl, CF₃, OR₉, substituiert sind, und wobei jedes R₉, gleich oder verschieden voneinander und bei jedem Auftreten, unabhängig ausgewählt ist aus der Gruppe bestehend aus Wasserstoff, C₁-₄-Alkyl und einer Hydroxylschutzgruppe,
- m eine ganze Zahl von mindestens 3 ist; und
wobei die mindestens eine Polysiloxanverbindung mit der Formel (III) auf das mindestens eine Polymer (P) durch Reaktion von mindestens einem Teil der -CH=CH₂-Einheit des Monomers (M) mit der H-Si-Einheit der Polysiloxanverbindung mit der Formel (III) aufgepfropft wird.

2. Polymerelektrolyt nach Anspruch 1, wobei von 80,0 Mol-% bis 99,0 Mol-%, bevorzugt von 90,0 Mol-% bis 98,5 Mol-%, bevorzugt von 92,0 Mol-% bis 98,5 Mol-%, bevorzugt von 94,0 Mol-% bis 98,5 Mol-% der wiederkehrenden Einheiten des Polymers (P) EO-Einheiten sind.

3. Polymerelektrolyt nach Anspruch 1 oder Anspruch 2, wobei von 0,5 Mol-% bis 5,0 Mol-%, oder von 0,5 Mol-% bis 4,0 Mol-%, oder von 1,0 Mol-% bis 4,0 Mol-%, oder von 1,0 Mol-% bis 3,0 Mol-% der wiederkehrenden Einheiten des Polymers (P) PO-Einheiten sind.

4. Polymerelektrolyt nach einem der vorhergehenden Ansprüche, wobei von 1,2 Mol-% bis 4,0 Mol-% oder von 1,5 Mol-% bis 3,5 Mol-% oder von 1,5 Mol-% bis 3,0 Mol-% der wiederkehrenden Einheiten des Polymers (P) wiederkehrende Einheiten sind, die von dem Monomer (M) der allgemeinen Formel (I) oder der allgemeinen Formel (II) abgeleitet sind, wobei R₁, R₂, n und X wie in Anspruch 1 definiert sind.

5. Polymerelektrolyt nach einem der vorhergehenden Ansprüche, wobei das Monomer (M) die Formel (II) aufweist: 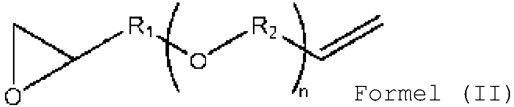 wobei
- jedes von R₁ und R₂, gleich oder verschieden voneinander und bei jedem Auftreten, ein C₁-₂-Alkandiyl ist und n eine ganze Zahl 0 oder 1 ist, bevorzugt n 1 ist.

6. Polymerelektrolyt nach einem der vorhergehenden Ansprüche, wobei das Polymer (P) ein statistisches Copolymer ist, das ein Mn (zahlenmittleres Molekulargewicht) von mindestens 10.000 g/mol und höchstens 150.000 g/mol aufweist.

7. Polymerelektrolyt nach einem der vorhergehenden Ansprüche, wobei jedes von R₃, R₄ und R₇, gleich oder verschieden voneinander und bei jedem Auftreten, unabhängig C₁-₆-Alkyl ist; jedes von R₅ und R₆, gleich oder verschieden voneinander und bei jedem Auftreten, unabhängig ausgewählt ist aus C₁-₄-Alkyl oder Phenyl, wobei das C₁-₄-Alkyl gegebenenfalls mit einem oder mehreren Substituenten, ausgewählt aus Halogenid, C₁-₄-Alkyl oder CF₃, substituiert ist; m eine ganze Zahl von mindestens 5 und höchstens 1000, bevorzugt von mindestens 5 und höchstens 500, bevorzugter von mindestens 5 und höchstens 100, noch bevorzugter von mindestens 5 und höchstens 20, noch bevorzugter von mindestens 7 und höchstens 20, noch bevorzugter von mindestens 8 und höchstens 15 ist.

8. Polymerelektrolyt nach einem der vorhergehenden Ansprüche, wobei das Polymer (P) und das Polysiloxan mit der Formel (III) mindestens teilweise in einem organischen Lösungsmittel, ausgewählt aus der Gruppe bestehend aus Benzol, Toluol, Xylol und Cymen, gelöst sind.

9. Polymerelektrolyt nach einem der vorhergehenden Ansprüche, wobei die Polysiloxanverbindung mit der Formel (III) in Gegenwart eines Katalysators, insbesondere eines Hydrosilylierungskatalysators, ausgewählt aus einem Karstedt-Katalysator, Wilkinson-Katalysator, Speier-Katalysator oder Mischungen davon, auf das Polymer (P) gepfropft wird.

10. Polymerelektrolyt nach einem der vorhergehenden Ansprüche, wobei die Polysiloxanverbindung mit der Formel (III) auf das Polymer (P) durch Reaktion von mindestens 10 Mol-% und höchstens 90 Mol-%, bevorzugter mindestens 30 Mol-% und höchstens 70 Mol-%, noch bevorzugter mindestens 40 Mol-% und höchstens 60 Mol-%, der-CH=CH₂-Einheit des Monomers (M) mit der H-Si-Einheit der Polysiloxanverbindung mit der Formel (III) gepfropft wird.

## Revendications

1. Électrolyte polymère approprié pour une utilisation dans des batteries secondaires lithium-ion, qui est obtenu par réaction entre :
i. au moins un polymère de polyéther [ci-après, polymère (P)], ledit polymère (P) comprenant :
a) au moins 70,0 % en moles de motifs oxyéthylène (EO) ;
b) 0,0 à 10,0 % en moles de motifs oxypropylène (PO) ; et
c) 1,00 à 4,0 % en moles de motifs récurrents dérivés d'au moins un monomère [ci-après, monomère (M)] de formule générale (I) ou de formule générale (II) : 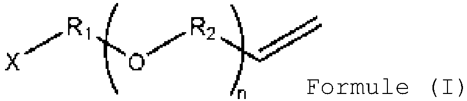 ou 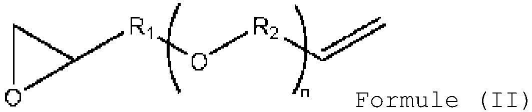 où
- chacun de R₁ et R₂, égaux ou différents et à chaque occurrence, est alcanediyle en C₁-₆, ledit alcanediyle en C₁-₆ étant éventuellement substitué par un ou plusieurs substituants sélectionnés parmi halogénure, alkyle en C₁-₄, cycloalkyle en C₃₋₆, CF₃, OR₈, et chacun des R₈, égaux ou différents et à chaque occurrence, étant indépendamment sélectionné dans le groupe hydrogène et alkyle en C₁₋₄ ; n est un entier de 0 ou 1 ou 2 ;
- chacun de X est un groupe partant sélectionné dans le groupe constitué par halogénure, trifluorométhanesulfonate, nonafluorobutanesulfonate, p-toluènesulfonate et méthanesulfonate ;
et
ii. au moins un composé polysiloxane ayant la formule (III) : 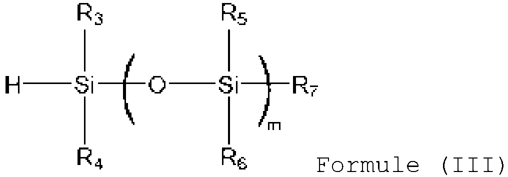 où
- chacun de R₃, R₄, R₅, R₆ et R₇, égaux ou différents et à chaque occurrence, est indépendamment sélectionné dans le groupe constitué par alkyle en C₁₋₆, cycloalkyle en C₃₋₆, aryle, alcoxy en C₁₋₆, hétérocyclyle, ledit alkyle en C₁₋₆, cycloalkyle en C₃₋₆, aryle, alcoxy en C₁₋₆, hétérocyclyle étant éventuellement substitué par un ou plusieurs substituants sélectionnés parmi halogénure, alkyle en C₁₋₄, cycloalkyle en C₃₋₆, CF₃, OR₉, et chacun des R₉, égaux ou différents et à chaque occurrence, étant indépendamment sélectionné dans le groupe constitué par hydrogène, alkyle en C₁₋₄, et un groupe protecteur d'hydroxyle,
- m est un entier d'au moins 3 ; et
dans lequel ledit au moins un composé polysiloxane ayant la formule (III) est greffé audit au moins un polymère (P) par le biais de la réaction d'au moins une fraction du fragment - CH=CH₂ du monomère (M) avec le fragment H-Si du composé polysiloxane ayant la formule (III).

2. Électrolyte polymère selon la revendication 1, dans lequel 80,0 % en moles à 99,0 % en moles, de préférence 90,0 % en moles à 98,5 % en moles, de préférence 92,0 % en moles à 98,5 % en moles, de préférence 94,0 % en moles à 98,5 % en moles des motifs récurrents du polymère (P) sont des motifs EO.

3. Électrolyte polymère selon la revendication 1 ou la revendication 2, dans lequel 0,5 % en moles à 5,0 % en moles, ou 0,5 % en moles à 4,0 % en moles, ou 1,0 % en moles à 4,0 % en moles, ou 1,0 % en moles à 3,0 % en moles des motifs récurrents du polymère (P) sont des motifs PO.

4. Électrolyte polymère selon l'une quelconque des revendications précédentes, dans lequel 1,2 % en moles à 4,0 % en moles, ou 1,5 % en moles à 3,5 % en moles, ou 1,5 % en moles à 3,0 % en moles des motifs récurrents du polymère (P) sont des motifs récurrents dérivés du monomère (M) de formule générale (I) ou de formule générale (II) où R₁, R₂, n et X sont tels que définis dans la revendication 1.

5. Électrolyte polymère selon l'une quelconque des revendications précédentes, dans lequel le monomère (M) est de formule (II) 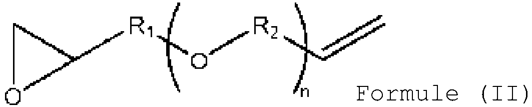 où
- chacun de R₁ et R₂, égaux ou différents et à chaque occurrence, est un alcanediyle en C₁₋₂ et n est un entier 0 ou 1, de préférence n vaut 1.

6. Électrolyte polymère selon l'une quelconque des revendications précédentes, dans lequel le polymère (P) est un copolymère statistique, ayant un Mn (poids moléculaire moyen en nombre) d'au moins 10 000 g/mol et d'au plus 150 000 g/mol.

7. Électrolyte polymère selon l'une quelconque des revendications précédentes, dans lequel chacun de R₃, R₄, et R₇, égaux ou différents et à chaque occurrence, est indépendamment alkyle en C₁₋₆ ; chacun de R₅ et R₆, égaux ou différents et à chaque occurrence, est indépendamment sélectionné parmi alkyle en C₁₋₄ ou phényle, ledit alkyle en C₁₋₄ étant éventuellement substitué par un ou plusieurs substituants sélectionnés parmi halogénure, alkyle en C₁₋₄, ou CF₃ ; m est un entier d'au moins 5 et d'au plus 1000, de préférence d'au moins 5 et d'au plus 500, plus préférentiellement d'au moins 5 et d'au plus 100, encore plus préférentiellement d'au moins 5 et d'au plus 20, encore plus préférentiellement d'au moins 7 et d'au plus 20, encore plus préférentiellement d'au moins 8 et d'au plus 15.

8. Électrolyte polymère selon l'une quelconque des revendications précédentes, dans lequel le polymère (P) et le polysiloxane ayant la formule (III) sont au moins partiellement dissous dans un solvant organique sélectionné dans le groupe constitué par benzène, toluène, xylène, et cymène.

9. Électrolyte polymère selon l'une quelconque des revendications précédentes, dans lequel le composé polysiloxane ayant la formule (III) est greffé au polymère (P) en présence d'un catalyseur, en particulier d'un catalyseur d'hydrosilylation choisi parmi un catalyseur de Karstedt, un catalyseur de Wilkinson, un catalyseur de Speier ou des mélanges de ceux-ci.

10. Électrolyte polymère selon l'une quelconque des revendications précédentes, dans lequel le composé polysiloxane ayant la formule (III) est greffé au polymère (P) par réaction d'au moins 10 % et d'au plus 90 % en moles, plus préférentiellement d'au moins 30 % et d'au plus 70 % en moles, encore plus préférentiellement d'au moins 40 % et d'au plus 60 % en moles, du fragment -CH=CH₂ du monomère (M) avec le fragment H-Si du composé polysiloxane ayant la formule (III).
